# EUROPÄISCHE PATENTSCHRIFT

(11) **EP 1 119 096 B1**
(45) Veröffentlichungstag und Bekanntmachung des Hinweises auf die Patenterteilung: **09.07.2003**
(21) Anmeldenummer: 01100797.8
(22) Anmeldetag: 15.01.2001
(51) Int. Cl.: H02M 7/12

(54) **Spannungsstabilisierungsschaltung an einer wechselstromgespeisten Last**
Voltage stabilising circuit at an ac powered load
Circuit de stabilisation de tension à une charge alimentée de courant alternative

(30) Priorität: 18.01.2000 DE 10001711
(43) Veröffentlichungstag der Anmeldung: 25.07.2001
(73) Patentinhaber: Diehl AKO Stiftung & Co. KG, 88239 Wangen (DE)
(72) Erfinder: Mangold, Harald, 73463 Lippach (DE)
(74) Vertreter: Hofmann, Gerhard, Dipl.-Ing. Patentassessor

(56) Entgegenhaltungen:
- PATENT ABSTRACTS OF JAPAN vol. 2000, no. 03, 30. März 2000 (2000-03-30) & JP 11 341809 A (TOSHIBA CORP), 10. Dezember 1999 (1999-12-10)
- PATENT ABSTRACTS OF JAPAN vol. 1996, no. 09, 30. September 1996 (1996-09-30) & JP 08 140354 A (TAMURA SEISAKUSHO CO LTD), 31. Mai 1996 (1996-05-31)
- PATENT ABSTRACTS OF JAPAN vol. 015, no. 026 (E-1025), 22. Januar 1991 (1991-01-22) & JP 02 269465 A (FUJI ELELCTROCHEM CO LTD), 2. November 1990 (1990-11-02)

## Beschreibung

Die Erfindung betrifft eine Schaltung zur Stabilisierung der Spannung an einer von einer Wechselstromquelle gespeisten Last, wobei parallel zur Last ein Glättungskondensator und in Reihe zur Last eine Diode geschaltet sind und den Glättungskondensator die Stromhalbwellen der einen oder anderen Polarität der Wechselstromquelle auf einen Sollspannungsbereich der Last laden.

Eine derartige Schaltung ist in der Schaltungstechnik bekannt. Die Wechselstromquelle weist einen hohen Innenwiderstand auf, wogegen eine Wechselspannungsquelle einen niedrigen Innenwiderstand hat. Eine Wechselstromquelle ist beispielsweise als Kondensatornetzteil oder Widerstandsnetzteil zur Speisung von Steuerschaltungen (Last) von Haushaltsgeräten gebräuchlich.

Bei einem Kondensatornetzteil bildet ein in Reihe zum öffentlichen Wechselspannungsnetz liegender Kondensator den hohen Innenwiderstand. Bei einem Widerstandsnetzteil bildet ein in Reihe zum Wechselspannungsnetz geschalteter hoher ohmscher Widerstand den hohen Innenwiderstand.

Nach dem Stand der Technik wird zur Stabilisierung der an der Last anstehenden Spannung auf einen Sollwertbereich der Last und damit dem Glättungskondensator eine Zenerdiode parallelgeschaltet. Nach Erreichen der durch die Zenerspannung bestimmten Sollspannung fließt der Strom der Wechselstromquelle über die Zenerdiode ab, um die Spannungsstabilisierung zu erreichen. Eine dementsprechend hohe Verlustleistung fällt an der Zenerdiode an. Dies bedeutet einen schlechten Wirkungsgrad sowie eine starke Erwärmung der Zenerdiode und setzt voraus, dass die Zenerdiode entsprechend ausgelegt ist. Mit einer Zenerdiode der baulich einfachen und leicht montierbaren SMD-Technik lässt sich die Schaltung meist nicht, oder zumindes nicht ohne größeren Aufwand realisieren, da eine auf die SMD-Technik ausgelegte Zenerdiode die hohe Verlustleistung oft nicht aufnehmen kann. Es wäre moglich, mehrere Zenerdioden zusammenzuschalten. Dies würde jedoch zu einem erhöhten Platzbedarf auf der zugehörigen Schaltungsplatine, und damit verbunden zu höheren Kosten führen.

Nicht um eine derartige Sollspannungsgewinnung aus einer Wechselstromquelle, sondern aus einer Gleichspannungsquelle handelt es sich, wenn gemäß dem Abstract zu JP 11341809 ein Spannungskonstanter vor der eigentlichen Last aus dem Wechselspannungsnetz über einen Transformator und einen Gleichrichter sowie über eine Begrenzerschaltung für die Gleichrichterspannung betrieben wird. Bei jener Begrenzerschaltung speist der Gleichrichter einen parallel zum Ausgang liegenden Glättungskondensator über eine Rückstrom sperrende Längsdiode. Der Kondensator entlädt sich aber nicht nur in den Spannungskonstanter, sondern auch noch über eine ihm parallel geschaltete Reihenschaltung aus Zenerdiode und Entladewiderstand - nämlich immer dann, wenn die Ladespannung des Kondensators die Durchbruchspannung der Zenerdiode erreicht hat. Der dadurch am Entladewiderstand auftretende Spannungssprung dient als Zündimpuls für einen Thyristor, der nun die Einspeisung des Gleichrichters vor der Rückstrom-Sperrdiode kurzschließt. Die hohe Verlustleistung entsteht daraufhin schon vor jener Längsdiode, bis der Thyristor abschaltet, weil seine Haltespannung von der Ausgangsspannung des Gleichrichters unterschritten ist. Inzwischen entlädt sich der Glättungskondensator über seine Last, bis er mit Abschalten des Thyristors von der nächstfolgenden Gleichspannungshalbwelle über die Längsdiode wieder aufgeladen wird. Daraus resultiert nicht nur die Problematik der wie oben dargelegt schwer zu beherrschenden Verlustleistungen, sondern auch eine nicht konstante, sondern gerade stark schwankende Ausgangsspannung.

Der Erfindung dagegen liegt die Aufgabe zugrunde, bei einem Kondensatornetzteil oben erläuterter Art die Umsetzung von der Konstantstromeinspeisung in die Konstantspannungsausgabe möglichst verlustarm zu gestalten, um die erörterten, schaltungstechnisch bedingten Temperaturprobleme mit einer einfach aufgebauten Schaltung zu beherrschen.

Erfindungsgemäß ist obige Aufgabe durch die Merkmale des Anspruchs 1 gelöst. Es ist dadurch erreicht, dass der die Spannungsstabilisierung störende Stromanteil (Stromüberschuss) der Stromhalbwellen über den Bypass abgeleitet wird, wobei in dem Bypass nur eine geringe Verlustleistung entsteht. Es ist dadurch möglich, für die SMD-Technik geeignete Bauteile zu verwenden. Die wesentlichen Vorteile bestehen insbesondere in einem geringen Platzbedarf, einem hohen Wirkungsgrad, einer geringen Wärmeentwicklung und in einem kostengünstigen Aufbau hinsichtlich der Kosten der Bauteile und der Kosten für die Bestückung der zugeordneten Platine mit den Bauteilen.

In bevorzugter Ausgestaltung der Erfindung öffnet der Schalter beim Unterschreiten des Sollspannungsbereichs oder beim Nulldurchgang der Stromhalbwelle.

Da sich der über den Bypass rückwärts fließende Strom infolge der jeweils anderen Stromhalbwelle, störend auf die sonstige Schaltung auswirkt, ist im Bypass ein Bauelement mit Diodenfunktion angeordnet, wobei die Polung bezogen auf die den Glättungskondensator ladende Stromhalbwelle ebenso wie die Polung der Diode ist, die mit der Last in Reihe liegt. Dadurch ist gewährleistet, dass die den Glättungskondensator nicht ladende Stromhalbwelle der Wechselstromquelle nicht über den Bypass fließt, wodurch der Stromverbrauch der Schaltung reduziert ist.

Weitere vorteilhafte Ausgestaltungen ergeben sich aus den Unteransprüchen und der folgenden Beschreibung von Ausführungsbeispielen. In den Zeichnungen sind durch stellvertretende Symbole Stromquellen angedeute, welche aus der Netzspannung, durch das Inreiheschalten hochohmiger Impedanzen entstehen, und die Eigenschaft haben, bei einer Unterbrechung des Stromflusses keine unendlich hohen Spannungen zu erzeugen, was bei idealen Stromquellen der Fall wäre. In der Zeichnung zeigen:
Figur 1a eine einfache Spannungsstabilisierung bei einem Widerstandsnetzteil nach dem Stand der Technik,
Figur 1b eine einfache Spannungsstabilisierung bei einem Kondensatornetzteil nach dem Stand der Technik,
Figur 2 eine erfindungsgemäße Prinzipschaltung mit Bypass,
Figur 3 ein Ausführungsbeispiel der Schaltung mit Thyristor im Bypass,
Figur 4 ein Ausführungsbeispiel der Schaltung mit einer Thyristor-Ersatzschaltung im Bypass.
Figur 5 ein zeitbezogenes Strom- und Spannungsdiagramm zur Schaltung nach den Figuren 2, 3 und 4 und
Figur 6 ein weiteres Ausführungsbeispiel für die Gewinnung mehrerer stabilisierten Spannungen aus einer Wechselstromquelle.

Zur Speisung von elektronischen Steuerungen von Geräten, beispielsweise Haushaltsgeräten, wie Waschmaschinen oder Spülmaschinen, aus dem öffentlichen Netz sind Netzteile erforderlich.

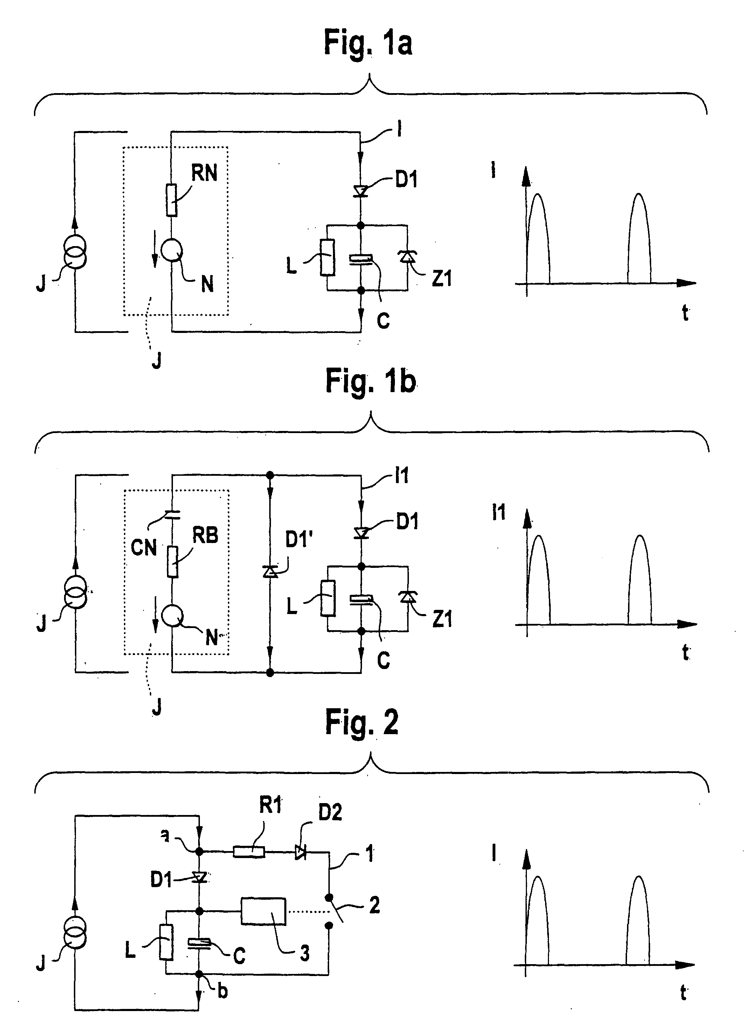

Figur 1a zeigt ein Widerstandsnetzteil, das eine Wechselstromquelle J bildet. In Reihe zum Wechselstromnetz N liegt ein ohmscher Widerstand RN, der den durch eine angeschlossene Schaltung fließenden Strom bestimmt und wesentlich größer als der differenzielle Widerstand ist, der durch die angeschlossene Schaltung gebildet wird.

Die Figur 1b zeigt ein Kondensatornetzteil, das die Wechselstromquelle J bildet. In Reihe zum Wechselspannungsnetz N liegt eine Kapazität CN, die den durch die angeschlossene Schaltung fließenden Strom bestimmt. Ein Reihenwiderstand RB dient der Begrenzung des Einschaltstroms.

An der Wechselstromquelle J liegen eine Gleichrichter-Diode D1 und eine Last L in Reihe. Parallel zur Last L ist ein Glättungskondensator C geschaltet. Für die Funktion des Kondensatornetzteils ist eine Rückwärtsdiode D1' vorgesehen, die umgekehrt wie die Diode D1 gepolt ist. Die Rückwärtsdiode D1' gewährleistet, dass durch die Kapazität CN ein sinusförmiger Strom ohne Gleichanteil fließen kann. So wirkt die Kapazität CN als Impedanz.

Zur Begrenzung der an der Last L anliegenden Spannung auf eine obere Sollspannung ist nach dem Stand der Technik (vgl. Fig.la und Fig.lb) parallel zum Glättungskondensator C eine Zenerdiode Z1 geschaltet. Da an dieser die Sollspannung der Last L anliegt und durch sie der Spitzenstrom der Stromhalbwellen der einen Polarität fließt, entsteht an ihr eine hohe Verlustleistung, die, wie beschrieben, in mehrerer Hinsicht unerwünscht ist.

Figur 2 zeigt ein Prinzipschaltbild, bei dem die Zenerdiode Z1 entfällt. Parallel zur Reihenschaltung der Last L bzw. des Glättungskondensators C und der Diode D1 ist ein Bypass 1 geschaltet, in dem ein Schalter 2 liegt, der von einer Steuerung 3 schaltbar ist.

Wenn beim Aufladen des Glättungskondensators C die Spannung an ihm die Sollspannung der Last L erreicht, schließt die Steuerung 3 den Schalter 2. Sie öffnet ihn wieder, wenn die Sollspannung unterschritten wird, oder wenn die Ladestromhalbwelle gegen oder durch Null geht.

Die Diode D1 ist so gepolt, dass nur die positiven Stromhalbwellen der Wechselstromquelle J den Glättungskondensator C laden. Durch die Polung der Diode D1 und die Schaltung des Bypasses 1 zwischen den Stellen a und b ist gleichzeitig erreicht, dass sich bei geschlossenem Schalter 2 der Glättungskondensator C nicht über den Bypass 1 entlädt.

Im Bypass 1 kann eine Diode D2 oder ein Bauelement mit Diodenfunktion liegen, die gleichsinnig mit der Diode D1 gepolt ist. Die Diode D2 verhindert, dass die negativen Stromhalbwellen über den Bypass 1 fließen, was der Fall sein könnte, wenn der Schalter 2 bei der negativen Stromhalbwelle geschlossen ist. Diese ist aber nur nötig, wenn sich dies störend auf die restliche Schaltung auswirkt. Die Diode D2 verhindert, falls vorhanden, eine negative Stromhalbwelle. Dies wiederum ist aber nur möglich, wenn es sich bei der Stromquelle J nicht um eine ideale, sondern um eine aus der sinusförmigen Netzspannung und einer hochohmigen Impedanz gebildeten, Stromquelle handelt, welche keine unendlich hohe Spannung im Leerlauf zeigt.

Im Bypass 1 kann ein Widerstand R1 liegen, der beim Schließen des Schalters 2 auftretende Stromspitzen begrenzt. Diese Stromspitzen treten nur auf, wenn es sich bei der Stromquelle um eine aus der Netzspannung und einer Kapazität gebildeten Stromquelle handelt. Er kann bei solch einem Kondensatornetzwerk nötig sein, wenn diese Stromspitzen nicht bereits durch einen Einschaltstrombegrenzungs-Widerstand, in Reihe zur strombestimmenden Kapazität, begrenzt werden.

Der ohmsche Wert des Widerstands R1 ist wesentlich kleiner als der ohmsche Widerstandswert der Last L. Der Spannungsabfall am Widerstand R1 ist also - bei geschlossenem Schalter 2 - wesentlich kleiner als der Spannungsabfall an der Last L.

Wenn die Wechselstromquelle J nur - wie in Figur 2. angedeutet - positive Stromhalbwellen lieferte, wären der Widerstand R1 und die Diode D2 nicht von prinzipieller Bedeutung. Durch die Realisierung der Stromquelle als Stromquelle an der sinusförmigen Netzspannung in Kombination mit einer hochohmigen Impedanz erhalten der Widerstand R1 und die Diode D2 ihre Bedeutung. Der Widerstand R1 begrenzt beim Kondensatornetzteil die Stromspitze, die durch den beim Schließen des Schalters auftretenden Spannungssprung verursacht wird. Der strombestimmende Kondensator CN des Kondensatornetzteils ist nicht geeignet, diese Stromspitze zu begrenzen. Der Widerstand R1 kann entfallen, wenn der Widerstand RB des Kondensatornetzteils die Stromspitze hinreichend begrenzt.

Die Diode D2 ist nötig, da sich der infolge der sinusförmigen Netzspannung rückwärts fließende Strom störend auf die Schaltung auswirkt.

Der wesentliche Vorteil der beschriebenen Schaltung ist, dass der Strom nach Erreichen der Sollspannung zum Zwecke der Spannungsstabilisierung zwar weiterfließt, nämlich über den geschlossenen Schalter 2; der Strom jedoch wegen des geringen Spannungsabfalls zwischen den Anschlussstellen a, b des Bypasses 1 nur zu einer geringen Verlustleistung an den betroffenen, im Bypass 1 liegenden Bauteilen führt.

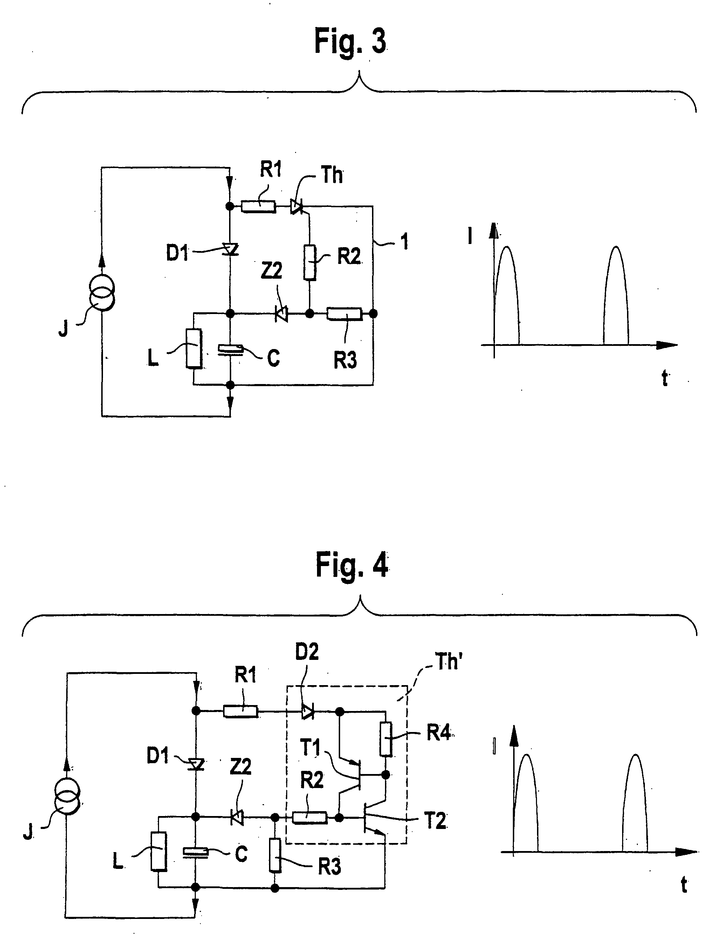

Nach Figur 3 sind der Schalter 2 und die Diode D2 durch einen Thyristor Th realisiert. In Reihe zum Gate des Thyristors ist ein Widerstand R2 geschaltet, der den Gate-Strom im Zündzeitpunkt begrenzt. Der Widerstand R2 kann entfallen, wenn eine solche Strombegrenzung nicht erforderlich ist. Der Widerstand R1 ist, wie oben beschrieben, nur bei einem aus der Netzspannung gespeisten Kondensatornetzteil von Bedeutung. Er kann, wie oben beschrieben, entfallen.

Eine Reihenschaltung aus einer Zenerdiode Z2 und einem Widerstand R3 liegt parallel zum Glättungskondensator C. Zwischen der Zenerdiode Z2 und dem Widerstand R3 ist das Gate des Thyristors Th, gegebenenfalls über den Widerstand R2, angeschlossen.

Erreicht beim durch die positive Stromhalbwelle erfolgenden Laden des Glättungskondensators C die Spannung am Glättungskondensator C und damit an der Last L den Sollwert, auf welchen die Zenerdiode Z2 ausgelegt ist, dann wird die Zenerdiode Z2 leitend, wodurch der Thyristor Th zündet.

Die am Widerstand R1 und an der Durchlaßstrecke des Thyristors Th abfallende Spannung bricht in dessen leitenden Zustand auf einen kleinen Wert zusammen und der zum Laden des Kondensators C nicht mehr nötige Strom fließt über den Thyristor Th bzw. den Bypass 1 ab. Da der Spannungsabfall klein ist, ist dementsprechend auch die am Widerstand R1 und am Thyristor Th abfallende Verlustleistung klein, so dass kleinbauende und kostengünstige Bauteile verwendet werden können.

Der durch die Zenerdiode Z2 und den Widerstand R3 sowie gegebenenfalls den Widerstand R2 fließende Strom sowie die dortigen Spannungsabfälle sind sehr klein, so dass auch an diesen Bauteilen keine hohe Verlustleistung auftritt. Jedenfalls lässt sich als Zenerdiode Z2 ein Bauteil verwenden, das für eine erheblich geringere Belastung ausgelegt ist als die Zenerdiode Z1 nach dem Stand der Technik.

Nach Figur 4 ist die Schaltung dadurch realisiert, dass anstelle des Thyristors Th dessen Ersatzschaltung Th' verwendet wird. Diese Schaltung kann kostengünstiger sein als der Einsatz eines Thyristors. Die beschriebene Thyristorfunktion ist durch die Diode D2, zwei Transistoren T1,T2 und den Widerstand R4 erreicht.

Die Diode D2 ist von Bedeutung, wenn statt der idealen, nur positive Stromhalbwellen liefernde Stromquelle einer reale, von der sinusförmigen Netzspannung gespeisten Stromquelle in Kombination mit einer hochohmigen Impedanz vorhanden ist. Der Grund dafür ist die geringe Emitter-Basis-Sperrspannung üblicher Transistoren, welche nicht in der Lage sind, die Rückwärtsspannung zu sperren. Für den Widerstand R1 gilt das oben Gesagte.

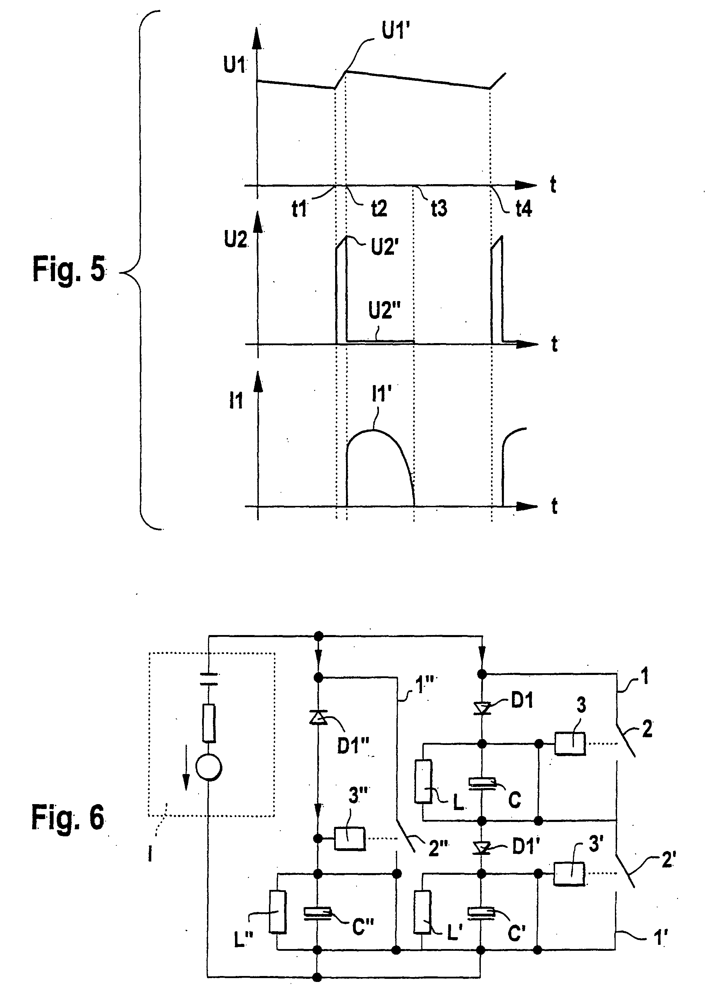

Im Spannungs-Stromdiagramm der Figur 5 sind die Spannung U1 über dem Glättungskondensator C, die Spannung U2 über dem Thyristor Th bzw. dessen Ersatzschaltung Th' sowie der Strom I1, der durch den Thyristor Th bzw. dessen Ersatzschaltung Th' fließt, im zeitlichen Verlauf gezeigt. Die Spannung U1 (Sollspannungsbereich) beträgt im Beispielsfalle etwa 24 V; der Spannungs-Maximalwert U2' der Spannung U2 liegt bei etwa 26 V.

Beim Zeitpunkt t1 beginnt die positive Stromhalbwelle der Wechselstromquelle. Der Glättungskondensator C wird nachgeladen (vgl. U1). Am gesperrten Bypass 1 (geöffnetem Schalter 2) liegt die hohe Spannung U2' praktisch stromlos (vgl. I1) an.

Ist beim Zeitpunkt t2 am Glättungskondensator C die obere Sollspannung U1' bzw. Zenerspannung der Zenerdiode Z2 erreicht, dann wird der Thyristor Th bzw. dessen Ersatzschaltung Th' leitend. Die an ihm abfallende Spannung bricht auf U2'' zusammen und es fließt über den Thyristor Th bzw. dessen Ersatzschaltung Th' der überschüssige Stromanteil I1' aus der positiven Stromhalbwelle, was der Spannungsstabilisierung an der Last L dient.

Beim Zeitpunkt t3 geht die Stromhalbwelle der Wechselstromquelle J durch Null, wodurch der Thyristor Th bzw. dessen Ersatzschaltung Th' sperrt (Schalter 2 öffnet), so dass der Strom I1 praktisch Null wird.

Während der folgenden negativen Stromhalbwelle der Wechselstromquelle bleiben die Spannung U1 und der Strom I1 bei Null. Wenn danach zum Zeitpunkt t4 die nächste positive Stromhalbwelle beginnt, wiederholen sich die beschriebenen Vorgänge.

Da zwischen den Zeitpunkten t2 und t3 der Strom I1 nur auf einem niedrigen Spannungsniveau U2'' fließt, ist die am Thyristor Th bzw. dem betreffenden Bauteil abfallende Verlustleistung gering. Bei der Verwendung von anderen Schaltern anstelle des Thyristors oder der Thyristor-Ersatzschaltung wird die Spannung U2 zwischen den Zeitpunkten t2 und t3 zu Null.

Zwischen den Zeitpunkten t2 und t4 ist die Last L mit der Spannung U1 aus dem Glättungkondensator C gespeist, wie dies bei einer Einweggleichrichtung üblich ist.

In Figur 6 ist ein weiteres Ausführungsbeispiel gezeigt, bei dem von der Wechselstromquelle J mehrere Lasten L,L1',L'' versorgt sind. Der Last ist jeweils eine Diode D1, D1',D1'' in Reihe und ein Glättungskondensator C,C',C'' parallelgeschaltet. Die Glättungskondensatoren C,C' werden von den positiven Stromhalbwellen und der Glättungskondensator C'' wird aus den negativen Stromhalbwellen der Wechselstromquelle J versorgt. Jeder Reihenschaltung der Glättungskondensatoren und der Dioden ist ein Bypass 1,1',1'' mit Schaltern 2,2',2'' parallelgeschaltet, wobei jedem der Schalter eine Steuerung 3,3',3'' zugeordnet ist. Die Realisierung. kann auch hier jeweils mit der oben beschriebenen Thyristorschaltung oder Thyristor-Ersatzschaltung erfolgen. Durch die in Figur 6 gezeigte Kaskadierung lassen sich aus einer einzigen Wechselstromquelle mehrere Lasten mit unterschiedlichen Sollspannungen speisen.

Bei dieser Art der Gewinnung mehrerer stabilisierter Spannungen muss gewährleistet sein, dass die Schalter 2 und 2' nur bei positiven Spannungen und der Schalter 2'' nur bei negativen Spannungen über dem geöffneten Schalter schließt, und die Schalter 2 und 2' nur positive, der Schalter 2'' aber nur negative Ströme führt. Dies kann durch eine Diodenfunktion des jeweiligen Schalters erreicht werden.

Bei der gleichzeitigen Erzeugung mehrerer stabilisierter Spannungen nach Figur 6 aus einer Wechselstromquelle kann jedem der Schalter die oben beschriebene Diode D2 in Reihe geschaltet sein. Die Dioden D2 verhindern, dass ich ein Rückwärtsstrom, der ohne diese Diode aufträte, sich störend auf die Schaltung auswirken kann.

## Patentansprüche

1. Schaltung zur Stabilisierung der Spannung an einer Last (L), mit einem parallel zu der last liegenden Kondensator (C), der aus einer Speiseschaltung über eine Diode (D1) aufladbar ist, bis bei Erreichen einer Sollspannung der Last (L) ein Bypass (1) durchgeschaltet wird,
**dadurch gekennzeichnet,**
**daß** die Speiseschaltung für die zu stabilisierende Spannung eine Wechselstromquelle (J) in Form einer Serienschaltung aus einer Kapazität (CN) hoher Impedanz und einem Wechselspannungsnetz (N) ist, wobei dieser Serienschaltung eine gegensinnig zur Diode (D1) gepolte Rückwärtsdiode (D1') parallelgeschaltet ist, und daß der Bypass (1) die Reihenschaltung aus Diode (D1) und Kondensator (C) mit einem, gegenüber dem ohmschen Innenwiderstand der Last (L) wesentlich kleineren, Stromspitzen-Begrenzungswiderstand (R1) sowie über ein zur Diode (D1) parallel gepoltes Bauelement mit Diodenfunktion (D2) überbrückt, indem ein mit dem Stromspitzen-Begrenzungswiderstand (R1) und mit dem Diodenfünktion (D2) aufweisenden Bauelement in Serie liegender Schalter (2) bei Überschreiten der Sollspannung am Kondensator (C) von einer Steuerung (3) geschlossen wird.

2. Schaltung nach Anspruch 1,
**dadurch gekennzeichnet,**
**daß** der Schalter (2) bei Nulldurchgang einer Stromhalbwelle wieder öffnet.

3. Schaltung nach Anspruch 1 oder 2,
**dadurch gekennzeichnet,**
**daß** das Bauelement mit Diodenfunktion eine Diode (2) ist.

4. Schaltung nach Anspruch 1 oder 2,
**dadurch gekennzeichnet,**
**daß** der Schalter (2) zusammen mit dem Bauelement mit Diodenfunktion (D2) von einem Thyristor (Th) gebildet ist.

5. Schaltung nach einem der Ansprüche 1 bis 3,
**dadurch gekennzeichnet,**
**daß** der Schalter (2) zusammen mit dem Bauelement mit Diodenfunktion (D2) von einer Thyristor-Ersatzschaltung (Th') gebildet ist.

6. Schaltung nach einem der Ansprüche 4 oder 5,
**dadurch gekennzeichnet,**
**daß** am Gate des Thyristors (Th) oder dessen Ersatzschaltung (Th') eine Zenerdiode (Z2) liegt, die bei der Sollspannung leitend wird und den Transistor (Th) oder dessen Ersatzschaltung (Th') leitend schaltet.

7. Verwendung der Schaltung nach Anspruch 1 zur Stabilisierung der Spannung an einer Last (L), mit einem parallel zu der last liegenden Kondensator (C), der aus einer Speiseschaltung über eine Diode (D1) aufladbar ist, bis bei Erreichen einer Sollspannung der Last (L) ein Bypass (1) durchgeschaltet wird, hinter einer kapazitiven Wechselstromquelle (J) in Form einer Serienschaltung aus einer Kapazität (CN) und einem Wechselspannungsnetz (N), der eine gegensinnig zur Diode (D1) gepolte Rückwärtsdiode (D1') parallelgeschaltet ist, wobei der Bypass (1) die Reihenschaltung aus Diode (D1) und Kondensator (C) über einen, gegenüber dem ohmschen Innenwiderstand der Last (L) wesentlich kleineren, Stromspitzen-Begrenzungswiderstand (R1) und über ein zur Diode (D1) parallel gepoltes Bauelement mit Diodenfunktion (D2) überbrückt, indem ein mit dem Stromspitzen-Begrenzungswiderstand (R1) und dem Bauelement mit Diodenfunktion (D2) in Serie liegender Schalter (2) bei Überschreiten der Sollspannung von einer Steuerung (3) geschlossen wird.

## Claims

1. Circuit for stabilizing the voltage in respect of a load (L), with a capacitor (C), in parallel with the load, which can be charged from a feeder circuit via a diode (D1) until, when a desired voltage of the load (L) is reached, a bypass (1) is switched through,
**characterized in that**
the feeder circuit for the voltage to be stabilized is an alternating-current source (J) in the form of a series connection of a capacitor (CN) of high impedance and an alternating-voltage mains (N), a reverse diode (D1'), polarized in the opposite direction to the diode (D1), being connected in parallel with this series connection,
and **in that** the bypass (1) bridges the series connection of diode (D1) and capacitor (C) by means of a peak load limiting resistance (R1), which is substantially smaller than the ohmic internal resistance of the load (L), as well as by way of a component with diode function (D2), which is polarized in parallel with the diode (D1), **in that** a switch (2), in series with the peak load limiting resistance (R1) and with the component having diode function (D2), is closed by a control (3) when the desired voltage is exceeded at the capacitor (C).

2. Circuit according to Claim 1,
**characterized in that**
the switch (2) re-opens on zero crossing of a current half wave.

3. Circuit according to Claim 1 or 2,
**characterized in that**
the component with diode function is a diode (2).

4. Circuit according to Claim 1 or 2,
**characterized in that**
the switch (2) together with the component with diode function (D2) consists of a thyristor (Th).

5. Circuit according to one of Claims 1 to 3,
**characterized in that**
the switch (2) together with the component with diode function (D2) consists of a thyristor-equivalent circuit (Th').

6. Circuit according to one of Claims 4 or 5,
**characterized in that**,
at the gate of the thyristor (Th) or its equivalent circuit (Th'), a Zener diode (Z2) is disposed, which, at the desired voltage, becomes conductive and conductively connects the thyristor (Th) or its equivalent circuit (Th').

7. Use of the circuit according to Claim 1 for stabilizing the voltage in respect of a load (L), with a capacitor (C), in parallel with the load, which can be charged from a feeder circuit via a diode (D1) until, when a desired voltage of the load (L) is reached, a bypass (1) is switched through, downstream of a capacitive alternating-current source (J) in the form of a series connection of a capacitor (CN) and an alternating-voltage mains (N), a reverse diode (D1'), polarized in the opposite direction to the diode (D1), being connected in parallel with this series connection, and the bypass (1) bridging the series connection of diode (D1) and capacitor (C) by way of a peak load limiting resistance (R1) which is substantially smaller than the ohmic internal resistance of the load (L) and by way of a component with diode function (D2), which is polarized in parallel with the diode (D1), in that a switch (2), in series with the peak load limiting resistance (R1) and with the component with diode function (D2), is closed by a control (3) when the desired voltage is exceeded

## Revendications

1. Circuit de stabilisation de la tension sur une charge (L), comportant un condensateur (C) parallèle à la charge et qui peut être chargé, à partir d'un circuit d'alimentation, à travers une diode (D1), jusqu'à ce qu'une dérivation (1) soit mise en circuit lorsqu'une tension de consigne de la charge (L) est atteinte, **caractérisé en ce que** le circuit d'alimentation pour la tension à stabiliser est une source de courant alternatif (J) sous la forme d'un circuit série constitué d'une capacité (CN) de grande impédance et d'un réseau de tension alternative (N), à ce circuit série étant montée en parallèle une diode inverse (D1'), polarisée en sens contraire à la diode (D1), et **en ce que** la dérivation (1) court-circuite le circuit série constitué de la diode (D1) et du condensateur (C), avec une résistance de limitation des pointes de courant (R1) sensiblement inférieure à la résistance interne ohmique de la charge (L), ainsi que par l'intermédiaire d'un composant, polarisé parallèlement à la diode (D1), avec fonction de diode (D2), **en ce qu'**un interrupteur (2), en série avec la résistance de limitation des pointes de courant (R1) et avec le composant présentant la fonction de diode (D2), est fermé par une commande (3) en cas de dépassement de la tension de consigne sur le condensateur (C).

2. Circuit selon la revendication 1, **caractérisé en ce que** l'interrupteur (2) s'ouvre à nouveau en cas de passage par zéro d'une demi-onde de courant.

3. Circuit selon la revendication 1 ou 2, **caractérisé en ce que** le composant avec fonction de diode est une diode (2).

4. Circuit selon la revendication 1 ou 2, **caractérisé en ce que** l'interrupteur (2) avec le composant à fonction de diode (D2) est formé par un thyristor (Dh).

5. Circuit selon l'une des revendications 1 à 3, **caractérisé en ce que** l'interrupteur (2) avec le composant à fonction de diode (D2) est formé par un circuit de remplacement de thyristor (Th').

6. Circuit selon l'une des revendications 4 ou 5, **caractérisé en ce qu'**à la porte du thyristor (Th) ou sur son circuit de remplacement (Th') se trouve une diode Zener (Z2) qui devient conductrice à la tension de consigne et commande de manière conductrice le transistor (Th) ou son circuit de remplacement (Th').

7. Utilisation du circuit selon la revendication 1 pour la stabilisation de la tension sur une charge (L), comportant un condensateur (C) parallèle à la charge et qui peut être chargé, à partir d'un circuit d'alimentation, à travers une diode (D1), jusqu'à ce qu'une dérivation (1) soit mise en circuit lorsqu'une tension de consigne de la charge (L) est atteinte, derrière une source de courant alternatif (J) capacitive sous la forme d'un circuit série constitué d'une capacité (CN) et d'un réseau de tension alternative (N), et auquel est montée en parallèle une diode inverse (D1') polarisée en sens contraire de la diode (D1), la dérivation (1) court-circuitant le circuit série constitué de la diode (D1) et du condensateur (C), avec une résistance de limitation des pointes de courant (R1) sensiblement inférieure à la résistance interne ohmique de la charge (L), ainsi que par l'intermédiaire d'un composant, polarisé parallèlement à la diode (D1), avec fonction de diode (D2), en ce qu'un interrupteur (2), en série avec la résistance de limitation des pointes de courant (R1) et avec le composant présentant la fonction de diode (D2), est fermé par une commande (3) en cas de dépassement de la tension de consigne sur le condensateur (C).
